(19) Europäisches Patentamt / European Patent Office / Office européen des brevets

(11) **EP 3 498 458 A1**

(12) **EUROPEAN PATENT APPLICATION**

(43) Date of publication:
**19.06.2019 Bulletin 2019/25**

(51) Int Cl.:
**B29C 64/241** (2017.01)     **B29C 64/124** (2017.01)

(21) Application number: **18166635.5**

(22) Date of filing: **10.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.12.2017 CN 201711313920**

(71) Applicants:
• **XYZprinting, Inc.**
  **New Taipei City 22201 (TW)**
• **Kinpo Electronics, Inc.**
  **New Taipei City 22201 (TW)**

(72) Inventors:
• **Lee, Chien-Te**
  **22201 New Taipei City (TW)**
• **Huang, Chen-Fu**
  **22201 New Taipei City (TW)**

(74) Representative: **2K Patentanwälte Blasberg Kewitz & Reichel Partnerschaft mbB Schumannstrasse 27 60325 Frankfurt am Main (DE)**

(54) **THREE-DIMENSIONAL PRINTING DEVICE AND THREE-DIMENSIONAL PRINTING METHOD**

(57) The disclosure provides a three-dimensional printing device and a three-dimensional printing method. The device includes a controller, a tank and a printing platform. The controller performs a three-dimensional printing operation according to a slice file, and judges the magnitude of shear force corresponding to a slice object in the slice file to determine a specific rotating angle. A carrying surface of the printing platform faces a bottom surface of the tank. When the controller performs the three-dimensional printing operation, the printed object corresponding to the slice object is formed between the carrying surface of the printing platform and the bottom surface of the tank. The controller controls the printing platform to move away the tank by a default vertical distance, and controls the tank to rotate by a specific rotating angle, such that the printed object is removed from the bottom surface of the tank.

FIG. 1

## Description

BACKGROUND

Technical Field

The disclosure is related to a printing technology, and particularly to a three-dimensional printing device and a three-dimensional printing method.

Description of Related Art

As the technology advanced in recent years, many methods that utilize additive manufacturing technology (e.g. layer-by-layer model construction) to build three-dimensional (3D) physical models have been proposed. Typically, the additive manufacturing technology is to convert data of a 3D model, which is constructed by software, such as computer aided design (CAD), into multiple thin (quasi-two-dimensional) cross-sectional layers that are stacked in sequence. In the meantime, many techniques for forming thin cross-sectional layers are also proposed. For example, a printing module of a printing apparatus is usually configured to move above a base along an XY plane according to spatial coordinates XYZ constructed according to the design data of the 3D model, so as to use a construction material to form shapes of the cross-sectional shapes correctly.

Take the technology that forms 3D objects by curing the construction material with a light source as an example, the printing module is configured to be immersed in a liquid-state modelling material in a tank, and a light source module is disposed on the XY plane to irradiate the liquid-state modelling material which is used as the constructing material, so as to cure and stack the liquid-state modelling material on a printing platform. Accordingly, by moving the printing platform layer-by-layer along the Z axis, the liquid-state modelling material can thus be gradually cured and stacked into a three-dimensional printed object.

In existing technologies, when each layer of printed object is cured, at least one of the printing platform and the tank needs to be rotated so that the printed object on the layer can be removed from the tank, and the printing operation of the next layer can be proceeded. However, typically, the removing method is performed by rotating the printing platform or the tank back and forth by 180 degrees, 360 degrees or by a default angle, such that the tank is rotated by the same rotating angle after each layer of printed object is cured. Therefore, the conventional removing method is time-consuming, and it is likely that the printed object is still not removed from the tank after the printing platform or the tank is rotated. In view of the foregoing, a plurality of exemplary embodiments are provided below.

SUMMARY

The disclosure provides a three-dimensional (3D) printing device and a 3D printing method capable of effectively saving time for performing 3D printing, and effectively separating a completely modeled printed object from a tank.

In the disclosure, a 3D printing device includes a controller, a tank and a printing platform. The controller performs 3D printing operation according to a slice file, and judges the magnitude of the shear force corresponding to at least one slice object in the slice file to determine a specific rotating angle. The tank is coupled to the controller. The printing platform is coupled to the controller and disposed above the tank. A carrying surface of the printing platform faces a bottom surface of the tank. When the controller performs the 3D printing operation, the printed object corresponding to the slice object is formed between the carrying surface of the printing platform and the bottom surface of the tank. The controller controls the printing platform to move away the tank by a default vertical distance, and controls the tank to rotate by a specific rotating angle, such that the printed object is removed from the bottom surface of the tank.

In the disclosure, a 3D printing method is adapted to a 3D printing device. The 3D printing device includes a controller, a tank and a printing platform. The 3D printing method includes: performing a 3D printing operation according to a slice file by the controller, and judging the magnitude of the shear force corresponding to at least one slice object in the slice file to determine a specific rotating angle; when the controller performs the 3D printing operation, forming the printed object corresponding to the slice object between the carrying surface of the printing platform and the bottom surface of the tank; controlling the printing platform by the controller to move away the tank by a default vertical distance, and controlling the tank to rotate by a specific rotating angle, such that the printed object is removed from the bottom surface of the tank.

In summary, the 3D printing device and the 3D printing method of the disclosure are capable of determining a specific rotating angle by judging the magnitude of the shear force corresponding to the slice object in the printing file, thereby effectively saving the time for performing 3D printing as well as effectively separating the completely modeled printed object from the tank.

To make the aforementioned more comprehensible, several embodiments accompanied with drawings are described in detail as follows.

BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 is a schematic view illustrating a three-dimensional (3D) printing device according to an embodiment of the disclosure.

FIG. 2A is a schematic view illustrating forming a printed object according to an embodiment of the disclosure.

FIG. 2B is a schematic view illustrating rotating a tank according to an embodiment of the disclosure.

FIG. 2C is a schematic view illustrating separating a printed object from a tank according to an embodiment of the disclosure.

FIG. 3 is a schematic view illustrating analyzing a slice file according to an embodiment of the disclosure.

FIG. 4 is a schematic view illustrating analyzing a slice file according to another embodiment of the disclosure.

FIG. 5 is a schematic view illustrating analyzing a slice file according to yet another embodiment of the disclosure.

FIG. 6 is a flowchart illustrating a 3D printing method according to an embodiment of the disclosure.

DESCRIPTION OF EMBODIMENTS

In order to facilitate understanding of the content in the disclosure, reference will now be made in detail to the present preferred embodiments of the disclosure, examples of which are illustrated in the accompanying drawings. Wherever possible, the same reference numbers are used in the drawings and the description to refer to the same or like parts.

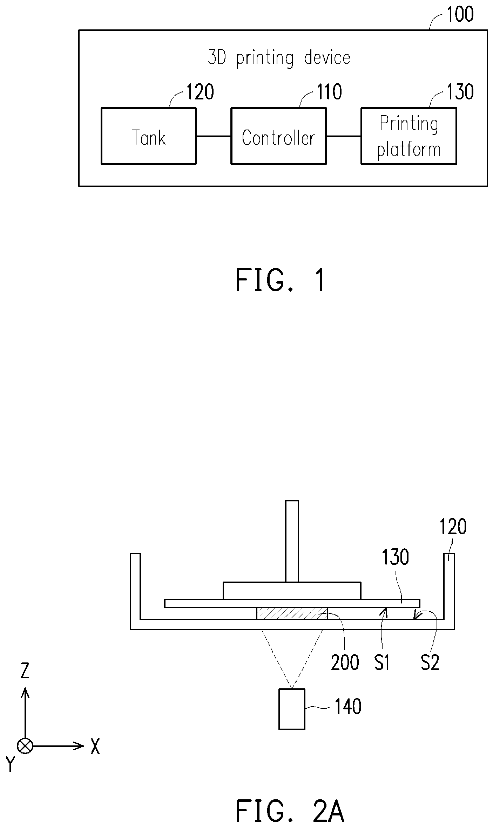

FIG. 1 is a schematic view illustrating a three-dimensional (3D) printing device according to an embodiment of the disclosure. Referring to FIG. 1, a 3D printing device 100 includes a controller 110, a tank 120 and a printing platform 130. The controller 110 is coupled to the tank 120 and the printing platform 130. In the embodiment, the printing platform 130 is disposed above the tank 120, and a carrying surface of the printing platform 130 faces the bottom surface of the tank 120. In the embodiment, when the controller 110 performs 3D printing operation, the printed object corresponding to the slice object is formed between the carrying surface of the printing platform 130 and the bottom surface of the tank 120. Meanwhile, when the controller 110 performs the 3D printing operation according to the slice file, the controller 110 further judges the magnitude of the shear force corresponding to a slice object in the slice file to determine a specific rotating angle. Therefore, when the controller 110 completes the 3D printing operation of the slice file, the controller 110 controls the printing platform 130 to shift at a default vertical distance in a direction away from the tank 120, and controls the tank 120 to rotate by the specific rotating angle such that the printed object is removed from the bottom surface of the tank 120.

In the embodiment, the controller 110 may include a processing chip, an image processing chip or, for example, a central processing unit (CPU), or other programmable general purpose or special purpose microprocessor, a digital signal processor (DSP), a programmable logic controller (PCL), an application specific integrated circuit (ASIC), a programmable logic device (PLD), other similar processing circuit or a combination of the above.

Additionally, in the embodiment, the 3D printing device 100 may further includes other unit such as a peripheral unit including a motor unit, a roller unit, a sensing unit or the like to be applied to assist in realizing the 3D printing device and the 3D printing method of the disclosure. The motor unit is, for example, configured to rotate the tank 120 or moving the printing platform 130. However, sufficient teaching, suggestions and implementations regarding the periphery units can be derived by persons skilled in the art according to conventional knowledge of basic unit of typical 3D printing device, and thus no further descriptions are incorporated herein.

FIG. 2A is a schematic view illustrating forming a printed object according to an embodiment of the disclosure. Referring to FIG. 1 to FIG. 2A, the 3D printing device 100 may further include a light emitting unit 140. The light emitting unit 140 is coupled to the controller 110. In the embodiment, the tank 120 is a transparent material and filled with a liquid-state modeling material. The light emitting unit 140 provides light to irradiate a bottom surface S2 of the tank 120 so that the liquid-state modeling material in an irradiating region can be cured into a printed object 200. The liquid-state forming material is, for example, a photosensitive resin material, which should not be construed as a limitation to the disclosure. In the embodiment, the controller 110 controls the light emitting unit 140 to provide the light to irradiate the corresponding position of the bottom surface S2 of the tank 120 according to the shape of the slice object in the slice file, such that the printed object 200 is formed between the carrying surface S1 of the printing platform 130 and the bottom surface S2 of the tank 120.

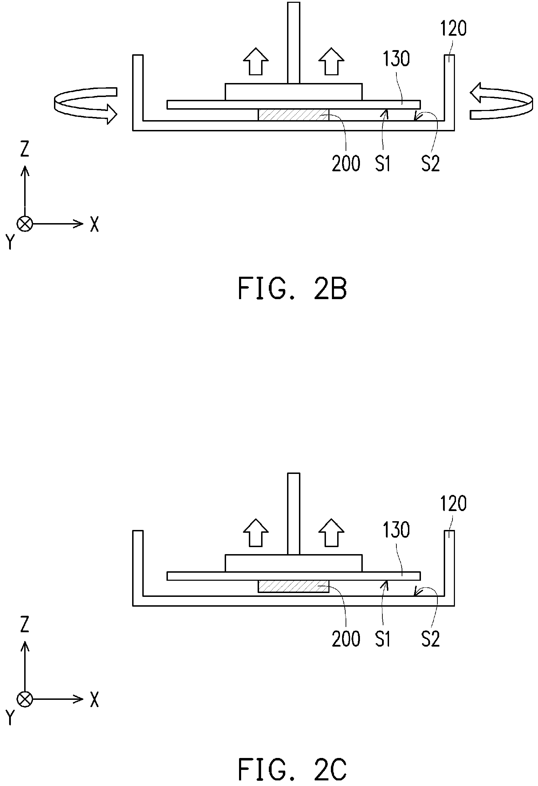

FIG. 2B is a schematic view illustrating rotating a tank according to an embodiment of the disclosure. Referring to FIG. 1 to FIG. 2B, when the printed object 200 is completely modeled, the controller 110 controls the printing platform 130 to shift at a default vertical distance in a direction (a positive Z-axis direction) away from the tank 120, and the controller 110 controls the tank 120 to rotate by a specific rotating angle so that the printed object 200 is removed from the bottom surface S2 of the tank 120. In the embodiment, the default vertical distance is, for example, 2 mm, which should not be construed as a limitation to the disclosure.

Specifically, after the printing platform 130 is shifted at the default vertical distance in the direction (positive Z-axis direction) away from the tank 120, it is likely that the printed object 200 is still attached to the bottom surface S2 of the tank 120. Therefore, the controller 110 further controls the tank 120 to rotate the tank 120. In the condition that the printing platform 130 is fixed, by rotating the tank, the printed object 200 can be subjected to the shear force to be removed from the bottom surface S2 of the tank 120. In the embodiment, the magnitude of the shear force is associated with the size of the area where the printed object 200 is in contact with the printing platform 130 or the position where the printed object 200 is located on the printing platform 130. In other words, the controller 110 controls the tank 120 to rotate by a specific rotating angle so that the printed object 200 is removed from the bottom surface S2 of the tank 120. Moreover, the specific rotating angle is, for example, determined according to the size of the area where the printed object 200 is in contact with the printing platform 130 or the position were the printed object 200 is disposed on the printing platform 130. In the embodiment, the positive X-axis direction, the positive Y-axis direction and the positive Z-axis direction are perpendicular to each other. A rotating plane of the tank 120 is parallel with a plane formed by the positive X-axis direction and the positive Y-axis direction, and the printing platform 130 is shifted along the positive Z-axis direction.

In the embodiment, the controller 110 may control the printing platform 130 to shift at the default vertical distance (2mm) in a direction (positive Z-axis direction) away from the tank 120 first, and then control the tank 120 to rotate along a specific direction, such that the printed object 200 is removed from the bottom surface S2 of the tank 120, which should not be construed as a limitation to the disclosure. In an embodiment, the controller 110 may also control the printing platform 130 to shift at the default vertical distance in a direction (positive Z-axis direction) away from the tank 120 while simultaneously controlling the tank 120 to rotate along a specific direction, such that the printed object 200 is removed from the bottom surface S2 of the tank 120.

In the embodiment, the controller 110 controls the tank 120 to rotate by a specific rotating angle in a specific rotating direction so that the printed object 200 is removed from the bottom surface S2 of the tank 120. It should be indicated that the controller 110 in the embodiment does not rotate the tank 120 by the specific rotating angle again in a direction opposite to the specific rotating direction. In the embodiment, since the printing platform 130 is fixed, no matter which angle by which the tank 120 is rotated, the position on which the printed object 200 is fixed on the printing platform 130 is not affected. However, in an embodiment, in consideration that if the bottom surface S2 of the tank 120 might not be parallel with the horizontal plane, after the tank 120 is rotated, when the next layer of printed object is formed between the printing platform 130 and the tank 120, the next layer of printed object is likely to be inclined. Therefore, in specific condition, in order to achieve printing accuracy, when the controller 110 controls the tank 120 to rotate by a specific rotating angle in a specific rotating direction, the controller 110 may further control the tank 120 to rotate by the specific rotating angle again in a direction opposite to the specific rotating direction, such that the tank 120 is restored to the same position.

FIG. 2C is a schematic view illustrating separating a printed object from a tank according to an embodiment of the disclosure. Referring to FIG. 1 to FIG. 2C, the controller 110 controls the printing platform 130 to shift at another default vertical distance in a direction (positive Z-axis direction) away from the tank 120, such that a gap is provided between the printed object 200 and the bottom surface S2 of the tank 120 to cure the next layer of printed object. Therefore, the height of the gap may be a default height for the next layer of printed object. Also, in the embodiment, the controller 110 may proceed to analyze the next layer of slice file to judge the magnitude of another shear force corresponding to the next layer of slice object in the next layer of slice file to determine another specific rotating angle. In other words, in the printing process of a multiple-layer printed object, after each layer of printed object is formed, since it is required that the tank 120 be rotated by a specific rotating angle to separate the newly modeled printed object from the bottom surface of the tank 120 in order to perform the next modeling printing, for the 3D printing device 100 in the embodiment, in the printing process of the multiple-layer printed object, there is no need to cost additional time for the tank 120 to be rotated additionally. The specific rotating angle by which the tank 120 corresponding to each layer of printed object is separately determined according to the analyzing result of the corresponding slice file.

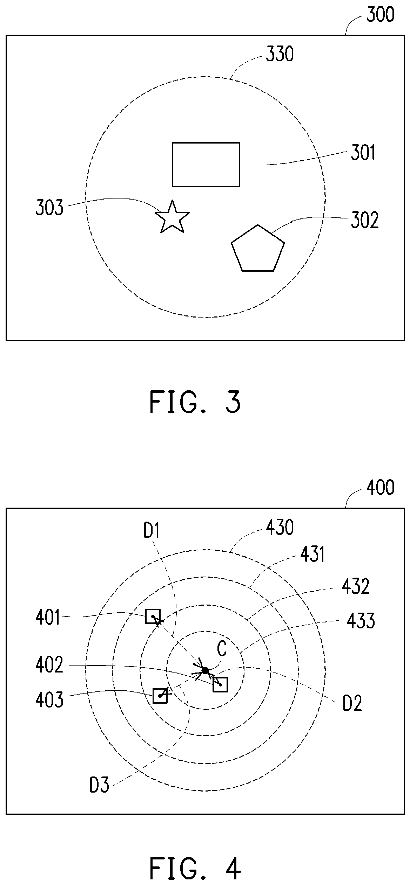

FIG. 3 is a schematic view illustrating analyzing a slice file according to an embodiment of the disclosure. Referring to FIG. 1 and FIG. 3, the slice file may include a layered image 300 shown in FIG. 3. In the embodiment, the layered image 300 may include a plurality of slice objects 301, 302, 303. The slice objects 301, 302 and 303 have different shapes and sizes. In the embodiment, a platform range 330 corresponds to a carrying surface range (e.g., a range of carrying surface S1 shown in FIG. 2A) of the printing platform 130. The slice objects 301, 302 and 303 are distributed in the platform range 330 at different positions. In the embodiment, the controller 110 determines the specific rotating angle of the tank 120 according to the largest area of one of the slice objects 301, 302 and 303, and the specific rotating angle of the tank 120 is proportional to the largest area of one of the laired objects 301, 302 and 303.

Specifically, the controller 110 may analyze the size of the area of respective slice objects 301, 302 and 303 of the layered image 300, and determine that the slice object 301 has the largest area. The controller 110 may further determine the magnitude of the corresponding shear force according to the area of the slice object 301. After calculating the shear force corresponding to the area of the slice object 301, the controller 110 can acquire the specific rotating angle corresponding to the tank 120. Therefore, when the controller 110 completes printing the plurality of printed objects corresponding to the slice objects 301, 302 and 303 according to the layered image 300, the controller 110 can rotate the tank 120 by the acquired specific rotating angle of the tank 120 such that the printed objects can be effectively removed from the bottom surface of the tank 120, and the 3D printing operation for the next layer can be performed.

Additionally, sufficient teaching, suggestions and implementation regarding the calculating method of the magnitude of the shear force can be derived by persons skilled in the art according to the material characteristics of the printed object, the surface material characteristic of the tank and general mechanics calculation, and thus no further descriptions are incorporated herein.

However, in an embodiment, the controller 110 may determine the specific rotating angle according to a total area of the slice objects 301, 302 and 303, and the specific rotating angle is proportional to the total area. Specifically, the controller 110 may analyze the size of the total area of the slice objects 301, 302 and 303 of the layered image 300. The controller 110 may further determine the magnitude of the corresponding shear force according to the total area of the slice objects 301, 302 and 303. After calculating the magnitude of the shear force corresponding to the total area of the slice objects 301, 302 and 303, the controllers 110 can obtain the specific rotating angle corresponding to the tank 120. Therefore, when the controller 110 completes printing the plurality of printed objects corresponding to the slice objects 301, 302 and 303 according to the layered image 300, the controller 110 can make the printed objects to be effectively removed from the bottom surface of the tank 120 by rotating the tank 120 at the acquired specific rotating angle of the tank 120, so that the 3D printing operation for the next layer can be performed.

FIG. 4 is a schematic view illustrating analyzing a slice file according to another embodiment of the disclosure. Referring to FIG. 1 and FIG. 4, the slice file may include a layered image 400 shown in FIG. 4. In the embodiment, the layered image 400 may include a plurality of slice objects 401, 402 and 403. The slice objects 401, 402 and 403 have different shapes and sizes. In the embodiment, a platform range 430 corresponds to the carrying surface range (e.g., the range of the carrying surface S1 shown in FIG. 2A) of the printing platform 130. The slice objects 401, 402 and 403 are distributed in the platform range 430 at different positions. In the embodiment, the platform range 430 may be further divided into a plurality of areas 431, 432 and 433 from outside to inside. The controller 110 determines the specific rotating angle according to one of the areas 431, 432 and 433, and the specific rotating angle is proportional to a horizontal distance between one of the areas 431, 432 and 433 and a central point C of the platform range 430.

Specifically, the controller 110 may analyze the position of the slice objects 401, 402 and 403 of the layered image 400 in the layered image 400. The slice objects 401, 402 and 403 are respectively located in the areas 431, 432 and 433. Moreover, one of the slice objects 401, 402 and 403 is located at a position in one of the areas 431, 432 and 433 farthest from the central point C of the platform range 430. In the embodiment, the controller 110 judges that the position of the slice object 401 is farthest from the central point C of the platform range 430. Thus, the controller 110 determines the corresponding specific rotating angle according to the area 431 in which the slice object 401 is located. It should be pointed out that, if farther away from the central point C of the platform range 430, the specific rotating angle is larger. Therefore, when the controller 110 completes printing a plurality of printed objects corresponding to the slice objects 401, 402 and 403 according to the layered image 400, the controller 110 can rotate the tank 120 by the required specific rotating angle of the tank 120, such that the printed objects can be effectively removed from the bottom surface of the tank 120, and the 3D printing operation for the next layer can be performed.

However, in an embodiment, the controller 110 may directly analyze a horizontal distance D1, D2 and D3 between the slice objects 401, 402 and 403 and the central point C of the platform range 430. Also, the controller 110 may pre-establish a lookup table to directly obtain the corresponding specific rotating angle by looking up the table.

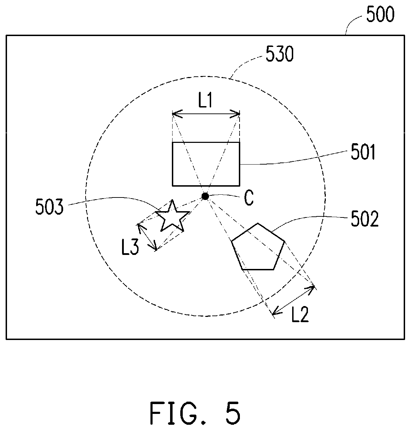

FIG. 5 is a schematic view illustrating analyzing a slice file according to yet another embodiment of the disclosure. Referring to FIG. 1 and FIG. 5, the slice file may include a layered image 500 shown in FIG. 5. In the embodiment, the layered image 500 may include a plurality of slice objects 501, 502 and 503. The slice objects 501, 502 and 503 have different shapes and sizes. In the embodiment, a platform range 530 corresponds to the carrying surface range (e.g., the range of the carrying surface S1 shown in FIG. 2A) of the printing platform 530. The slice objects 501, 502 and 503 are distributed in the platform range 530 at different positions. In the embodiment, the controller 110 determines the corresponding arc length according to one of the slice objects 501, 502 and 503 having the largest width distance, and calculate the specific rotating angle according to the arc length, wherein the specific rotating angle is proportional to the largest width distance.

Specifically, the controller 110 may analyze the width distance L1, L2 and L3 of respective slice objects 501, 502 and 503 of the layered image 500, and determine that the slice object 501 has the largest width distance. The controller 110 may further determine the corresponding arc length according to the width distance L1 of the slice object 501. After calculating the arc length corresponding to the width distance L1 of the slice object 501, the controller 110 can obtain the specific rotating angle corresponding to the tank 120. Therefore, when the controller 110 completes printing the plurality of printed objects corresponding to the slice objects 501, 502 and 503 according to the layered image 500, the controller 110 can rotate the tank 120 by the acquired specific rotating angle of the tank 120, such that the printed objects can be effectively removed from the bottom surface of the tank 120, and the 3D printing operation for the next layer can be performed.

In the embodiment, the arc length refers to the distance at which the position corresponding to the printed objects on the carrying surface of the printing platform 130 is shifted when the printing platform 130 is rotated. In the embodiment, the controller 110 uses the largest width distance of the slice objects 501, 502 and 503 as the corresponding arc length. In other words, in order to enable the printed objects corresponding to the slice objects 501, 502 and 503 to be smoothly removed from the bottom surface of the tank 120, the tank 120 is at least rotated by a specific rotating angle corresponding to the largest width distance. In the embodiment, the conversion between the arc length and the specific rotating angle may be expressed via the following equation (1):

$$L = \theta \times \frac{(2r \times \pi)}{360} \cdots \cdots \cdots \cdots \cdots (1)$$

In the above equation (1), L represents arc length, $\theta$ represents rotating angle, r represents the horizontal distance (or rotating radius) between the central point C of the printing range 530 to a specific position. For example, the controller 110 uses the width distance L1 as the arc length L, and uses the horizontal distance between the center of the slice object 501 to the central point C of the printing range 530 as r. Therefore, after calculation, the controller 110 can acquire the corresponding rotating angle $\theta$.

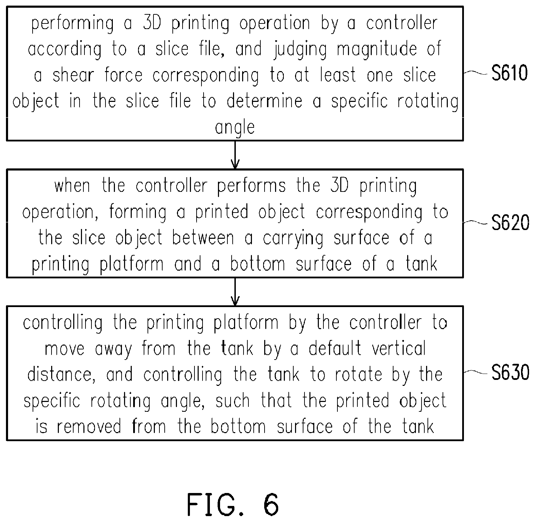

FIG. 6 is a flowchart illustrating a 3D printing method according to an embodiment of the disclosure. Referring to FIG. 1 to FIG. 2C and FIG. 6. The 3D printing method in the embodiment may at least be adapted to the 3D printing device 100 in the embodiments illustrated in FIG. 1 to FIG. 2C. In step S610, the 3D printing operation is performed by the controller 110 according to the slice file, and the magnitude of shear force corresponding to the slice object in the slice file is judged to determine the specific rotating angle. In step S620, when the controller 110 performs the 3D printing operation, the printed object 200 corresponding to the slice object is formed between the carrying surface S1 of the printing platform 130 and the bottom surface S2 of the tank 120. In step S630, the printing platform 130 is controlled by the controller 110 to shift at the default vertical distance in the direction away from the tank 120, and the tank 120 is controlled by the controller 110 to rotate by the determined specific rotating angle, such that the printed object 200 is removed from the bottom surface S2 of the tank 120. Therefore, the 3D printing method in the embodiment can effectively remove the completely modeled printed object 200 from the tank 120, so that the printing operation for the next layer of printed object can be performed. Also, the 3D printing method in the embodiment can effectively save the time for printing multiple-layer printed object.

In summary, the 3D printing device and the 3D printing method of the disclosure are capable of judging the magnitude of the shear force corresponding to the slice object in the printing file to determine the specific rotating angle, such that the tank can be rotated by the specific rotating angle after the printed object corresponding to the slice object is completely printed, thereby ensuring that the printed object can be practically separated from the tank without costing additional rotating time. Therefore, the 3D printing device and the 3D printing method of the disclosure can bring the effect of effectively saving time for 3D printing, and have the function of effectively separating the modeled printed object from the tank.

**Claims**

1. A three-dimensional printing device (100), comprising:

a controller (110), performing a three-dimensional printing operation according to a slice file, and judging magnitude of a shear force corresponding to at least one slice object (301, 302, 303, 401, 402, 403, 501, 502, 503) in the slice file to determine a specific rotating angle;
a tank (120), coupled to the controller (110); and
a printing platform (130), coupled to the controller (110), and disposed above the tank (120), wherein a carrying surface (S1) of the printing platform (130) faces a bottom surface (S2) of the tank (120), and when the controller (110) performs the three-dimensional printing operation, the printed object (200) corresponding to the slice object (301, 302, 303, 401, 402, 403, 501, 502, 503) is formed between the carrying surface (S1) of the printing platform (130) and the bottom surface (S2) of the tank (120), wherein the controller (110) controls the printing platform (130) to move away from the tank (120) by a default vertical distance, and controls the tank (120) to rotate by the specific rotating angle, such that the printed object (200) is removed from the bottom surface (S2) of the tank (120).

2. The three-dimensional printing device (100) as claimed in claim 1, wherein the controller (110) determines the specific rotating angle according to a largest area of one of the at least one slice object (301, 302, 303), and the specific rotating angle is proportional to the largest area.

3. The three-dimensional printing device (100) as claimed in claim 1, wherein the controller (110) determines the specific rotating angle according a total area of the at least one slice object (301, 302, 303), and the specific rotating angle is proportional to the total area.

4. The three-dimensional printing device (100) as claimed in claim 1, wherein a platform range (430) in the slice file has a plurality of areas, and one of the at least one slice object (401, 402, 403) is located at a position in one of the plurality of areas farthest from a central point (C) of the platform range (430), wherein the controller (110) determines the specific rotating angle according to the one of the plurality of areas, and the specific rotating angle is proportional to a horizontal distance (D1, D2, D3) between the one of the plurality of areas and the central point (C) of the platform range (430).

5. The three-dimensional printing device (100) as claimed in claim 1, wherein the controller (110) determines an arc length according to one of the at least one slice object (501, 502, 503) having a largest width distance (L1), and calculates the specific rotating angle according to the arc length, wherein the specific rotating angle is proportional to the largest width distance (L1).

6. The three-dimensional printing device (100) as claimed in any one of the claims 1 to 5, wherein the controller (110) controls the tank (120) to rotate by the specific rotating angle in a first rotating direction, and the controller (110) further controls the tank (120) to rotate by the specific rotating angle in a second rotating direction, such that the printed object (200) is removed from the bottom surface (S2) of the tank (120), wherein the first rotating direction is opposite to the second rotating direction.

7. The three-dimensional printing device (100) as claimed in any one of the claims 1 to 6, wherein when the printed object (200) is removed from the bottom surface (S2) of the tank (120), the controller (110) controls the printing platform (130) to move away from the tank (120) again by another default vertical distance, and the controller (110) performs another three-dimensional printing operation according to another slice file.

8. The three-dimensional printing device (100) as claimed in any one of the claims 1 to 7, further comprising:

a light source, coupled to the controller (110), and disposed underneath the tank (120), the light source being configured to emit light toward the tank (120),
wherein the tank (120) is filled with a liquid-state modeling material, and when the controller (110) performs the three-dimensional printing operation, a portion of the liquid-state modeling material is cured by being irradiated by the light to form into the printed object (200).

9. A three-dimensional printing method, adapted to a three-dimensional printing device (100), the three-dimensional printing device (100) comprising a controller (110), a tank (120) and a printing platform (130), wherein the three-dimensional printing method comprises:

performing a three-dimensional printing operation by the controller (110) according to a slice file, and judging magnitude of a shear force corresponding to at least one slice object (301, 302, 303, 401, 402, 403, 501, 502, 503) in the slice file to determine a specific rotating angle;
when the controller (110) performs the three-dimensional printing operation, forming a printed object (200) corresponding to the slice object (301, 302, 303, 401, 402, 403, 501, 502, 503) between the carrying surface (S1) of the printing platform (130) and the bottom surface (S2) of the tank (120); and
controlling the printing platform (130) by the controller (110) to move away from the tank (120) by a default vertical distance, and controlling the tank (120) to rotate by the specific rotating angle, such that the printed object (200) is removed from the bottom surface (S2) of the tank (120).

10. The three-dimensional printing method as claimed in claim 9, wherein the step of judging the magnitude of the shear force corresponding to the at least one slice object (301, 302, 303) in the slice file to determine the specific rotating angle comprises:
determining the specific rotating angle by the controller (110) according to a largest area of one of the at least one slice object (301, 302, 303), and the specific rotating angle being proportional to the largest area.

11. The three-dimensional printing method as claimed in claim 9, wherein the step of judging the magnitude of the shear force corresponding to the at least one slice object (301, 302, 303, 401, 402, 403, 501, 502, 503) in the slice file to determine the specific rotating angle comprises:
determining the specific rotating angle by the controller (110) according to a total area of the at least one slice object (301, 302, 303), and the specific rotating angle being proportional to the total area.

**12.** The three-dimensional printing method as claimed in claim 9, wherein a platform range (430) in the slice file has a plurality of areas, and one of the at least one slice object (401, 402, 403) is located at a position in one of the plurality of areas farthest from a central point (C) of the platform range (430), wherein the step of judging the magnitude of the shear force corresponding to the at least one slice object (301, 302, 303, 401, 402, 403, 501, 502, 503) in the slice file to determine the specific rotating angle comprises:

determining the specific rotating angle by the controller (110) according to the one of the plurality of areas, and the specific rotating angle being proportional to a horizontal distance (D1, D2, D3) between the one of the plurality of areas and the central point (C) of the platform range (430).

**13.** The three-dimensional printing method as claimed in claim 9, wherein the step of judging the magnitude of the shear force corresponding to the at least one slice object (301, 302, 303, 401, 402, 403, 501, 502, 503) in the slice file to determine the specific rotating angle comprises:

determining an arc length by the controller (110) according to one of the at least one slice object (501, 502, 503) having a largest width distance (L1), and calculating the specific rotating angle according to the arc length, wherein the specific rotating angle is proportional to the largest width distance (L1).

**14.** The three-dimensional printing method as claimed in any one of the claims 9 to 13, wherein the step of controlling the tank (120) to rotate by the specific rotating angle such that the printed object (200) is removed from the bottom surface (S2) of the tank (120) comprises:

controlling the tank (120) by the controller (110) to rotate by the specific rotating angle in a first rotating direction, and controlling the tank (120) to rotate by the specific rotating angle in a second rotating direction, such that the printed object (200) is removed from the bottom surface (S2) of the tank (120), wherein the first rotating direction is opposite to the second rotating direction.

**15.** The three-dimensional printing method as claimed in any one of the claims 9 to 14, further comprising:

when the printed object (200) is removed from the bottom surface (S2) of the tank (120), the printing platform (130) is controlled by the controller (110) to move away from the tank (120) again by another default vertical distance; and

performing another three-dimensional printing operation by the controller (110) according to another slice file.

FIG. 1

FIG. 2A

FIG. 2B

FIG. 2C

FIG. 3

FIG. 4

FIG. 5

performing a 3D printing operation by a controller according to a slice file, and judging magnitude of a shear force corresponding to at least one slice object in the slice file to determine a specific rotating angle ~S610

when the controller performs the 3D printing operation, forming a printed object corresponding to the slice object between a carrying surface of a printing platform and a bottom surface of a tank ~S620

controlling the printing platform by the controller to move away from the tank by a default vertical distance, and controlling the tank to rotate by the specific rotating angle, such that the printed object is removed from the bottom surface of the tank ~S630

# FIG. 6

Europäisches
Patentamt

European
Patent Office

Office européen
des brevets

## EUROPEAN SEARCH REPORT

Application Number

EP 18 16 6635

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 996 852 A1 (AUTODESK INC [US])<br>23 March 2016 (2016-03-23)<br>* paragraph [0021] - paragraph [0040] *<br>* paragraph [0059] *<br>* paragraph [0062] - paragraph [0071] *<br>* paragraph [0081] - paragraph [0095] *<br>----- | 1-3,<br>7-11,15<br>4,5,12,<br>13 | INV.<br>B29C64/241<br>B29C64/124 |
| X | US 2016/368210 A1 (CHEN YONG [US] ET AL)<br>22 December 2016 (2016-12-22)<br>* figures 3c,4c *<br>* paragraph [0045] - paragraph [0053] *<br>* figure 1b *<br>* figure 5b *<br>----- | 1-15 | |
| X | WO 2010/045950 A1 (IVOCLAR VIVADENT AG<br>[LI]; ROHNER GOTTFRIED [CH]; WACHTER<br>WOLFGANG [LI]) 29 April 2010 (2010-04-29)<br>* claims 1,6,11,17 *<br>* page 7, paragraph 3 *<br>----- | 1-3,<br>7-11,15 | |

TECHNICAL FIELDS
SEARCHED      (IPC)

B29C
B33Y
A61C

The present search report has been drawn up for all claims

| Place of search | Date of completion of the search | Examiner |
|---|---|---|
| The Hague | 8 November 2018 | Whelan, Natalie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 16 6635

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2018

| Patent document cited in search report | | Publication date | Patent family member(s) | | Publication date |
|---|---|---|---|---|---|
| EP 2996852 | A1 | 23-03-2016 | EP | 2996852 A1 | 23-03-2016 |
| | | | GB | 2514139 A | 19-11-2014 |
| | | | US | 2014339741 A1 | 20-11-2014 |
| | | | WO | 2014186463 A1 | 20-11-2014 |
| US 2016368210 | A1 | 22-12-2016 | NONE | | |
| WO 2010045950 | A1 | 29-04-2010 | EP | 2337667 A1 | 29-06-2011 |
| | | | ES | 2408233 T3 | 19-06-2013 |
| | | | JP | 5480907 B2 | 23-04-2014 |
| | | | JP | 2012505773 A | 08-03-2012 |
| | | | US | 2011310370 A1 | 22-12-2011 |
| | | | US | 2014044824 A1 | 13-02-2014 |
| | | | WO | 2010045950 A1 | 29-04-2010 |

EPO FORM P0459

For more details about this annex : see Official Journal of the European Patent Office, No. 12/82